# EUROPEAN PATENT APPLICATION

(11) **EP 1 547 699 A1**
(43) Date of publication of application: **29.06.2005**
(21) Application number: 03753598.6
(22) Date of filing: 25.09.2003
(51) Int. Cl.: B07B 1/10, B07B 13/075, B07C 5/06

(54) **FRUIT SIZING MACHINE**

(30) Priority: 30.09.2002 ES 200202209
(71) Applicant: Dominguez Ribes, Juan Ramon, 46727 Gandia (Valencia) (ES)
(72) Inventor: Dominguez Ribes, Juan Ramon, 46727 Gandia (Valencia) (ES)
(74) Representative: Ungria Lopez, Javier
(86) International application number: PCT/ES2003/000484
(87) International publication number: WO 2004/028710

(57) **Abstract**

It comprises several continuous belts (1) with a concentric arrangement, having a set of confronting orifices (3) by way of funnels, so that their sizes decrease progressively from the outermost belt to the innermost belt. The fruits being received by the outermost belt, fall by gravity through the different sets of confronting orifices until the respective belt does not allow such fruit to pass. It can occur that the fruit also remains on the outermost belt provided said fruit is greater in size than the orifices of such outer belt. Afterwards, the fruits fitting in the orifices of the respective belts will be transported by the belts to some trays mounted at the end of such belts in the forward direction. The in-feeding of the fruits is carried out in an orderly and uniform form with a single piece of fruit per orifice of the outermost belt.

## Description

The present invention, as expressed in the heading of this descriptive specification, relates to a fruit calibrating machine.

Although it is intended for calibrating most fruits, it is of special application to cherries for selecting different diameters of this fruit, since cherries require separation into several sizes.

The system for separating the pieces of fruit maintains the integrity thereof at all times.

Thus, the machine of the invention is capable of calibrating fruit, in general bodies of spherical and irregular structure.

### BACKGROUND OF THE INVENTION

The calibrating of fruit is being carried out by means of a manual system, in which the fruit is transported on conveyor belts of rollers or of any other type, so that along such belts different operatives are located that have the job of selecting the pieces of fruit according to their size.

In other cases devices are used (Utility Model number 243.106) which include a worm conveyor with horizontal rollers, vertical guides being incorporated between each two rollers, which guides support and allow the displacement of a third upper roller, the position of which with respect to the other two lower rollers produces individual lateral passages for calibrating the fruit.

### DESCRIPTION OF THE INVENTION

The fruit calibrating machine which constitutes the object of the invention is characterised in principle in that it comprises a series of continuous belts in concentric arrangement, so that such belts come with a set of orifices, the measurements of which reduce progressively from the outermost belt of greatest length to the innermost belt of least length.

The orifices of all the belts are positioned and aligned, at least, in an upper substantially horizontal area, so that the different sets of orifices of said upper area which corresponds with the horizontal upper spans of the belts, said orifices constitute funnel-like passages through which the pieces of fruit pass, so that such pieces fall by gravity down through said orifices until finding themselves on the belt where the dimension of the orifices impedes such pieces from passing.

The belts are in continuous movement, so that at the end of each of them in the forward direction, there are some small trays to collect the fruit selected according to the different sizes.

Each closed loop belt is coupled over rollers or the like, so that through a roller of each belt the movement is transmitted in a synchronised way by means of a motor, a chain or belt and other necessary elements.

At the beginning of the outermost belt and above the same there is an in-feeding device from which the produce falls in order and in a uniform manner on the orifices of the outermost belt, one piece of fruit for each orifice, so that in that initial area of the outermost belt and below the same, a base has been mounted close to the belt so that in an initial stretch with pieces of fruit fitted in the orifices of the foresaid outer belt they do not fall downward through the orifices to the innermost belts. Also, in this initial stretch, the pieces of fruit fitting in the orifices of the outer belt will rest on that base.

The incorporation of the base is necessary, in the first place, because below said initial area is one of the rollers whereon the belts are mounted and therefore, it is not an area where the selection of fruit by size should take place.

The in-feeding device comprises a conveyor belt from where the produce falls to the initial area of the outer perforated belt, via a gentle slope and some longitudinal guides which determine some channels corresponding with the alignments of the orifices of the outermost belt so that those guides and channels resolve the possible accumulation of fruit. Also, on the final stretch of the feed belt, two guides have been mounted converging toward the gentle slope in order to prevent the produce from falling over the sides of the machine.

The calibrating system, as has already been stated above, is specially applicable to those fruits which, like the cherry are sold with a small stem or "petiole", since the process of falling through the concentric orifices results in said petiole being positioned vertically, assuring thereby that the cherry is always gauged by the same area of its body.

This is combined with the fact that the distance between belts must not be greater than the height of the petiole of the cherry inserted in that immediately below, to prevent it from falling over and being calibrated incorrectly.

Next to facilitate a better understanding of this descriptive specification and forming an integral part of the same, some figures are appended in which by way of illustration and not restrictively, the object of the invention has been represented.

### BRIEF DESCRIPTION OF THE DRAWINGS

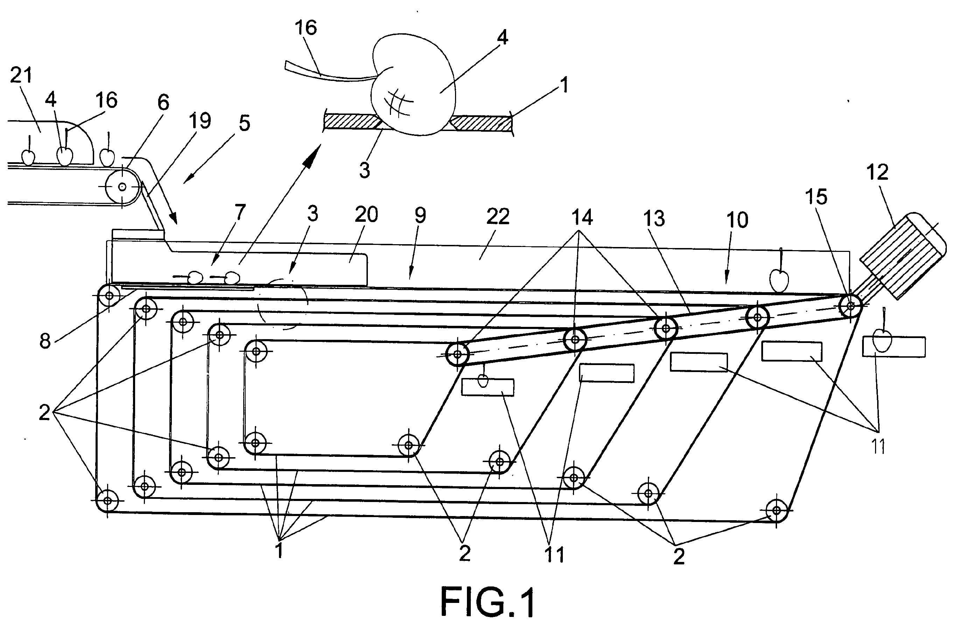

**Figure 1. -** It shows a general view of the fruit calibrating machine with some details.

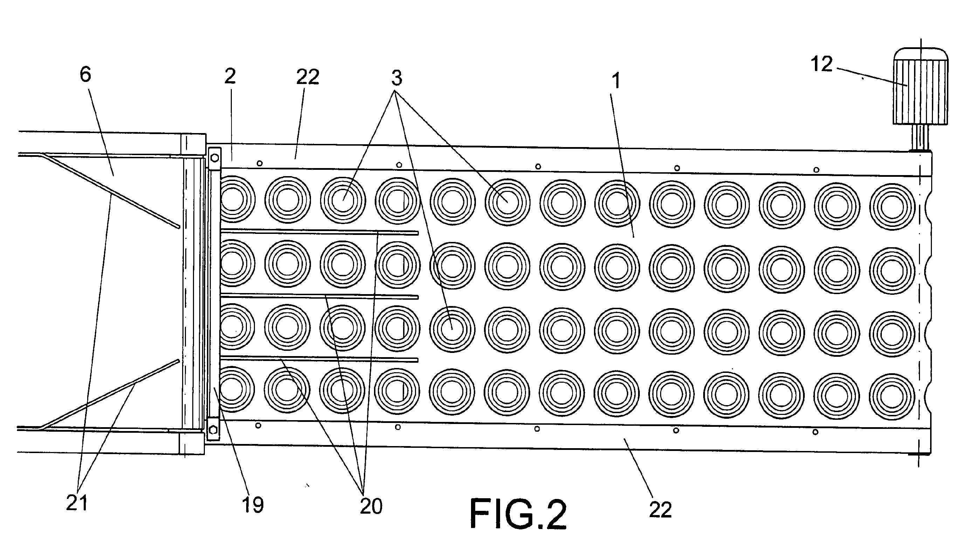

**Figure 2. -** It shows a plan view of the machine of the invention.

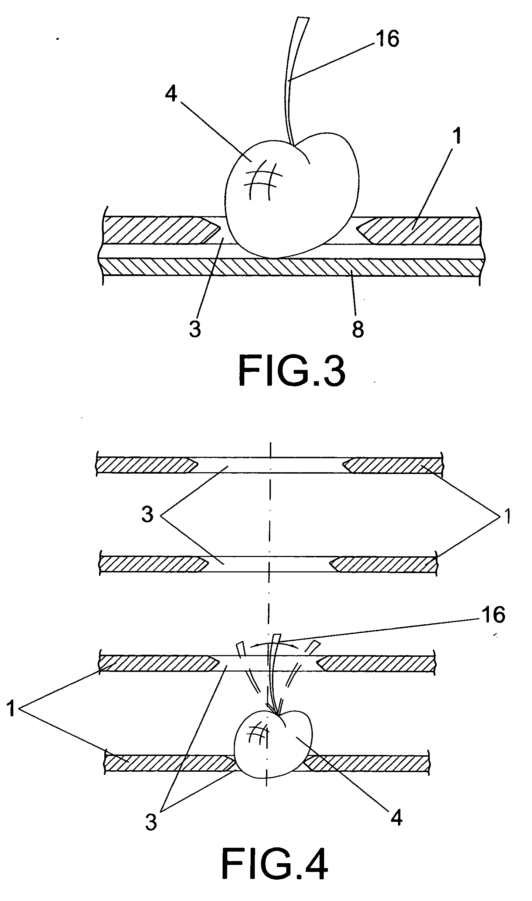

**Figure 3. -** It shows a view of an initial part of the machine.
**Figure 4. -** It shows a view of a central part of the machine.
**Figure 5. -** It shows another detailed view of a part of the previous figure.
**Figure 6. -** It shows another possible example of embodiment of that shown in the previous figure.

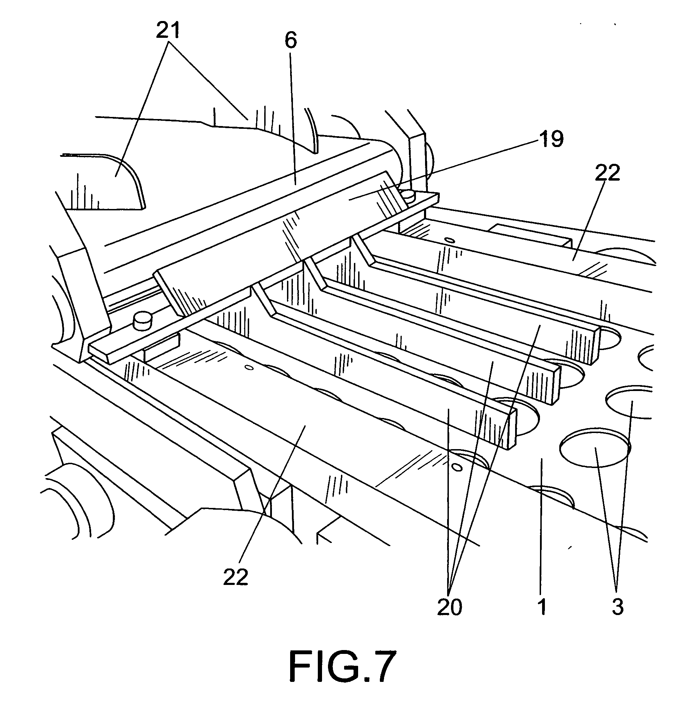

**Figure 7. -** It shows a view in perspective of the initial area of the machine where the in-feeding of the produce is carried out.

### DESCRIPTION OF AN EMBODIMENT OF THE INVENTION

An example of embodiment of the invention is described below with reference to the numbering scheme adopted in the figures.

It is determined starting from several continuous belts 1 in concentric arrangement coupled over several rotating elements 2, such as rollers, said belts including a set of circular orifices 3 in longitudinal alignments, the sizes of which decrease progressively from the outermost belt of greatest length to the innermost belt of least length.

The orifices 3 of all the belts 1 are aligned or positioned in the manner of funnels, at least in a substantially horizontal upper area of those belts 1, so that through those groups of orifices 3 the fruit 4 passes by gravitational effect downward until fitting in the orifices 3 of the respective belt 1 which does not allow such fruit 4 to pass.

In an initial area 7 of the outermost belt and above the same, there is an in-feeding device 5 which transports, by means of a conveyor belt 6, the fruit to that initial area of the outermost perforated belt, so that the fruit 4 will be deposited in a regulated manner on that initial area 7 of the outermost belt, the pieces being placed from the beginning individually in the orifices 3 of said outer belt 1.

Initially, also, a flat base 8 has been mounted below the outer belt 1 so that the pieces of fruit 4 are regulated individually in each orifice and do not fall downward through the respective orifices 3 of the belts 1, so that in this initial stretch 7 the pieces of fruit 4 lodged in correspondence with the orifices 3 of the outer belt will rest on said flat base 8.

The inclusion of the flat base 8 is necessary because in this initial area 7 part of the rollers 2 for coupling the belts are mounted, so that the passage of the fruit 4 takes place in a central area 9 of the belts where the rollers 2 for coupling such belts 1 are not located.

In some final areas 10 in the forward direction of the belts 1 some trays 11 are mounted to collect the fruit 4 calibrated according to the dimensions thereof, so that that of smallest size will be fitted in the orifices 3 of the innermost belt 1, whilst that of greatest size will be inserted in the orifices 3 of the second outermost belt. The middle-sized fruit will be collected and transported by the intermediate belts to the respective trays 11.

The synchronized movement of the belts 1 so that the orifices 3 are confronting for the calibrating of the fruits, is carried out in a known manner by means of an electric motor 12, chain 13 and pinions 14 and 15 and other necessary elements, all of them associated with one of the several rollers coupled to each belt 1 for transmitting the movement.

This calibrating system is of special interest in those fruits which like the cherry are sold with petiole 16, since the process of falling through the concentric orifices results in said petiole being positioned vertically, assuring thereby that the cherry is always gauged at the same area of its body.

This is combined with the fact that the distance between belts must not exceed the height of the petiole of the cherry inserted in the belt immediately below, to avoid it falling over and being calibrated incorrectly.

Furthermore, the geometry of the orifices has to reduce as much as possible the points of contact with the fruit. For which reason, the orifices incorporate a peripheral rounded edge 17. In turn, the upper face of the belts incorporates in correspondence with such orifices 3 an inclined annular plane 18 by way of a funnel converging toward that rounded edge 17. Thanks to this feature a smooth engagement is provided for the pieces of fruit in the orifices 3 of the belts.

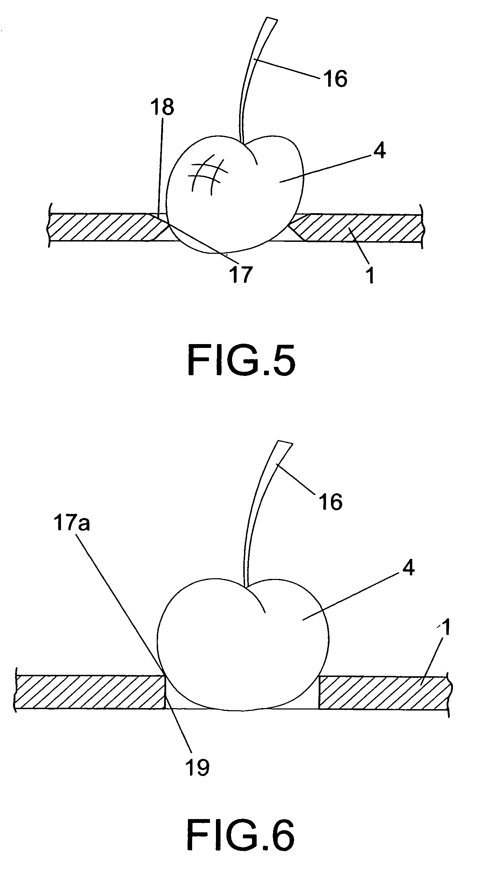

In another embodiment (figure 6) a rounded edge 17a is foreseen which is part of the mouth of the orifice 3; for which reason the latter has a vertical plane 23.

The in-feeding device 5 comprises the conveyor belt 6 from where the produce falls to the initial area of the outer perforated belt, via a gentle slope 19 and some longitudinal guides 20 which define some channels in correspondence with the alignments of the orifices 3 of the outermost belt, so that those guides and complementary channels resolve the possible accumulation of the fruit. Also, on the final stretch of the feed belt 6, two converging guides 21 have been arranged leading to the gentle slope 19 in order to prevent the produce falling over the sides of the machine.

Thus, the correct dosing of the fruit is assured thanks to the system of the channels and flat base 8, whereby each piece of fruit is fitted in an orifice, so that any possible accumulation will be resolved by means of the distribution which those channels provide, achieving greater speed thanks to the same.

Moreover, on the sides of the outer perforated belt there are some partitions 22 which prevent the unwanted dropping of the produce.

## Claims

1. **FRUIT CALIBRATING MACHINE**, intended for selecting different sizes of fruit according to volume of the fruit, **characterised in that** it comprises:
several continuous belts (1) in concentric arrangement coupled on several rotating elements (2) which drive the belts in a synchronized way, said belts including longitudinal alignments of confronting orifices (3) by way of funnels at least in a horizontal area of said belts, sizes of said orifices decrease progressively from an outermost belt to an innermost belt;
a flat base (8) arranged below an initial area (7) of the outermost belt, said area corresponding to a fruit intake area, where in this initial area the fruits located in the orifices of the belt rest on said flat base (8);
a tray (11) for collection of the fruits in a final area (10) of the belts in forward direction;
an in-feeding device (5) which transports the fruits to the initial area (7) of the outermost belt in an orderly and unitary manner in respective orifices (3) of said initial area (7);
in order to make the fruits fall by gravity through the confronting orifices, to the respective belt which does not allow the fruit to pass since its size is larger than the size of the orifices of the belt.

2. **FRUIT CALIBRATING MACHINE,** according to claim 1, **characterised in that** the feeding device (5) comprises a conveyor belt (6) which ends in a small slope (19) associated with longitudinal guides (20) which define some channels, in the initial area (7) of the outer belt, corresponding to the alignments of orifices (3).

3. **FRUIT CALIBRATING MACHINE,** according to any one of the previous claims, **characterised in that** the orifices (3) are provided with a configuration of funnel defined by an inclined plane (18) converging downward which ends in a rounded edge (17).

4. **FRUIT CALIBRATING MACHINE,** according to any one of claims 1 and 2, **characterised in that** the orifices (3) are provided with a peripheral rim defined by an angular outline provided with a rounded edge.

5. **FRUIT CALIBRATING MACHINE,** according to claims 1 and 2, **characterised in that** the orifices (3) have a vertical plane (23), whose mouth defines a rounded edge (17a).

6. **FRUIT CALIBRATING MACHINE,** according to claim 2, **characterised in that** a final stretch of the in-feed conveyor belt (6) comprises two guides (21) converging toward the slope (19) through which the fruit travels toward the initial area (7) of the outer belt in order to prevent the fruits from falling over sides of the fruit calibrating machine.

7. **FRUIT CALIBRATING MACHINE,** according to any one of the previous claims, **characterised in that** it comprises partitions (22) located on sides of an external perforated belt.
